# EUROPEAN PATENT SPECIFICATION

(11) **EP 3 617 348 B1**
(45) Date of publication and mention of the grant of the patent: **18.06.2025**
(21) Application number: 18790674.8
(22) Date of filing: 23.04.2018
(51) Int. Cl.: C25B 11/077, C25B 11/031, C25B 1/04, C25B 11/054, C25B 11/061, C25D 15/02

(54) **OXIDE-DISPERSED METAL POROUS BODY, ELECTROLYSIS ELECTRODE, AND HYDROGEN GENERATION APPARATUS**
OXIDDISPERGIERTER METAL PORÖSER KÖRPER, ELEKTROLYSE ELEKTRODEN UND WASSERSTOFFHERSTELLUNGSVORRICHTUNG
CORPS POREUX EN METAL DISPERSÉ DANS UN OXYDE, ÉLECTRODES POUR ÉLECTROLYSE ET DISPOSITIF DE PRODUCTION D'HYDROGÈNE

(30) Priority: 24.04.2017 JP 2017085698
(43) Date of publication of application: 04.03.2020
(73) Proprietor: Sumitomo Electric Industries, Ltd., Osaka-shi, Osaka 541-0041 (JP); National University Corporation Yokohama National University, Yokohama-shi, Kanagawa 240-8501 (JP)
(72) Inventor: OKUNO, Kazuki, Osaka-shi Osaka 541-0041 (JP); MAJIMA, Masatoshi, Osaka-shi Osaka 541-0041 (JP); HIGASHINO, Takahiro, Osaka-shi Osaka 541-0041 (JP); TAWARAYAMA, Hiromasa, Osaka-shi Osaka 541-0041 (JP); MITSUSHIMA, Shigenori, Yokohama-shi Kanagawa 240-8501 (JP)
(74) Representative: Boult Wade Tennant LLP
(86) International application number: PCT/JP2018/016464
(87) International publication number: WO 2018/199025

(56) References cited:
- WO-A1-2016/002579
- JP-A- 2012 510 567
- JP-A- H06 146 046
- JP-A- H09 302 493
- JP-A- S5 925 985
- JP-A- S55 100 988
- US-A1- 2012 305 407
- US-A1- 2016 130 678
- ARTHUR J. ESSWEIN ET AL: "Size-Dependent Activity of Co 3 O 4 Nanoparticle Anodes for Alkaline Water Electrolysis", JOURNAL OF PHYSICAL CHEMISTRY C, vol. 113, no. 33, 20 August 2009 (2009-08-20), pages 15068 - 15072, XP055205106, ISSN: 1932-7447, DOI: 10.1021/jp904022e
- "Nickel Foam", 5 October 2013 (2013-10-05), Retrieved from the Internet <URL:https://web.archive.org/web/20131005052708/https://www.mkt-intl.com/products/electrochemical-products/nickel-foam/> [retrieved on 20231128]

## Description

### TECHNICAL FIELD

The present invention relates to an oxide-dispersed metal porous body, an electrolysis electrode, and a hydrogen generation apparatus. The present application claims a priority based on Japanese Patent Application No. 2017-085698 filed on April 24, 2017.

### BACKGROUND ART

Hydrogen is suitable for storage and transportation, and also imposes a small environmental load. For this reason, hydrogen is drawing attention as highly efficient clean energy. Most of hydrogen has been generated through steam reforming of a fossil fuel. However, in order to reduce a load on environment, generation of hydrogen through water electrolysis becomes increasingly important. Since the water electrolysis involves consumption of electric power, various improvements of electrolysis electrodes are also attempted in order to realize highly efficient hydrogen generation systems (see Japanese Patent Laying-Open No. 2016-148074 (Patent Literature 1), Japanese Patent Laying-Open No. 2016-204732 (Patent Literature 2), Japanese Patent Laying-Open No. 2017-057470 (Patent Literature 3), and WO 2015/064644 (Patent Literature 4)).

For example, a hydrogen generation apparatus includes: a layered body in which a separating membrane is sandwiched between a pair of electrodes; and an electrolyzer configured to store the layered body therein. As a structure of the layered body, a zero gap structure is generally employed in which the separating membrane is in contact with the electrodes. A rib structure may be provided on a surface of each electrode not in contact with the separating membrane so as to secure a space for releasing gas bubbles. When a plurality of electrodes are used, a bipolar type involving series connection is generally employed.

US 2016/130678 (Patent literature 5) and Arthur J. Esswein et al (Non Patent literature 1) disclose oxide-dispersed metal porous bodies comprising a porous metal framework, and oxide particles carried in the metal framework.

### CITATION LIST

### PATENT LITERATURE

PTL 1: Japanese Patent Laying-Open No. 2016-148074
PTL 2: Japanese Patent Laying-Open No. 2016-204732
PTL 3: Japanese Patent Laying-Open No. 2017-057470
PTL 4: WO 2015/064644
PTL 5: US 2016/130678

### NON PATENT LITERATURE

NPL1: ARTHUR J. ESSWEIN ET AL: "Size-Dependent Activity of Co 3 O 4 Nanoparticle Anodes for Alkaline Water Electrolysis", JOURNAL OF PHYSICAL CHEMISTRY C, vol. 113, no. 33, 20 August 2009 (2009-08-20), pages 15068-15072

### SUMMARY OF INVENTION

One aspect of the present invention is directed to an oxide-dispersed metal porous body including a porous metal framework, and oxide particles carried in the metal framework according to claim 1.

Another aspect of the present invention is directed to an electrolysis electrode including the above-described oxide-dispersed metal porous body according to claim 7.

Still another aspect of the present invention is directed to a hydrogen generation apparatus according to claim 8, including: an electrolyzer configured to store an alkaline aqueous solution; an anode and a cathode each immersed in the alkaline aqueous solution; and a power supply configured to apply voltage between the anode and the cathode, wherein at least one of the anode and the cathode is the above-described electrolysis electrode.

Yet another aspect of the present invention is directed to a hydrogen generation apparatus according to claim 9, including: an anode; a cathode; an electrolyte membrane disposed between the anode and the cathode; and a power supply configured to apply voltage between the anode and the cathode, wherein at least one of the anode and the cathode is the above-described electrolysis electrode.

### BRIEF DESCRIPTION OF DRAWINGS

Fig. 1 is a schematic view showing an exemplary structure of a portion of a framework of an oxide-dispersed metal porous body.
Fig. 2 is a cross sectional view schematically showing a cross section of the portion of the framework in Fig. 1.
Fig. 3 is a schematic view showing an exemplary basic structure of a hydrogen generation apparatus.
Fig. 4 shows a photograph of Celmet^{®} representing an exemplary metal porous body base having a three-dimensional mesh structure.
Fig. 5 shows a SEM photograph of Celmet^{®} representing an exemplary metal porous body base having a three-dimensional mesh structure.

### DETAILED DESCRIPTION

### [Problem to be solved by the Present Disclosure]

An electrolysis electrode proposed for general water electrolysis has a two-dimensional structure and a small surface area. Accordingly, there is a limit as to improvement of efficiency of the water electrolysis. Use of a porous body having a two-dimensional structure, such as an expanded metal or a punching metal, has been also contemplated. However, gas generated through water splitting remains in fine holes of the porous body having the two-dimensional structure, with the result that an effective surface area for promoting electrolysis reaction is likely to be decreased.

### [Advantageous Effect of the Present Disclosure]

According to the oxide-dispersed metal porous body according to the present invention, there can be provided an electrolysis electrode having excellent hydrophilicity and excellent hydrogen generation ability as well as a hydrogen generation apparatus including the electrolysis electrode.

### [Description of Embodiments]

First, contents of embodiments of the present invention are listed and described.
(1) An oxide-dispersed metal porous body according to one embodiment of the present invention includes a porous metal framework, and oxide particles carried in the metal framework. Since the oxide particles are carried in the metal framework, the hydrophilicity of the metal porous body is improved. During water electrolysis, water is likely to permeate the oxide-dispersed metal porous body, and bubbles of gases such as hydrogen, oxygen, and the like generated through the water electrolysis are likely to be released from fine holes (for example, apertures 103, pores 101 and the like as described below) of the oxide-dispersed metal porous body. Therefore, the surface area of the metal framework can be utilized effectively for electrolysis reaction, thereby improving the efficiency of the water electrolysis.
(2) The porous metal framework preferably has a three-dimensional mesh structure. Accordingly, the surface area of the oxide-dispersed metal porous body or an electrolysis electrode including the metal porous body is significantly increased. Although the volume of the fine holes is large in such a metal porous body, the gas is likely to be released from the fine holes.
(3) The oxide-dispersed metal porous body has a porosity of more than or equal to 70 volume%. Accordingly, the surface area of the metal porous body or the electrolysis electrode including the metal porous body is significantly further increased.
(4) The oxide-dispersed metal porous body preferably has an aperture diameter of 100 µm to 2000 µm. Accordingly, the gas is more likely to be released from the fine holes.
(5) The oxide particles are preferably carried in the metal framework unevenly at a surface layer portion. Accordingly, the hydrophilicity of the oxide-dispersed metal porous body is improved further. The oxide particles may be included in a plating layer that coats at least a portion of the surface of the metal framework, for example.
(6) The oxide particles preferably has an average particle diameter of more than or equal to 0.1 µm and less than or equal to 10 µm. This is because the oxide particles are likely to be incorporated into or carried in the metal framework.
(7) A mass per unit area of the oxide-dispersed metal porous body is 200 g/m² to 1500 g/m², and is preferably 600 g/m² to 1500 g/m². In other words, an external appearance of the oxide-dispersed metal porous body has a shape in a form of a sheet, and a mass per unit area of the shape is 200 g/m² to 1500 g/m² and is preferably 600 g/m² to 1500 g/m². This is because a lightweight oxide-dispersed metal porous body having high strength and a large surface area or an electrolysis electrode including the metal porous body can be obtained.
   It should be noted that the unit area of the oxide-dispersed metal porous body refers to a unit area of a projected area of the oxide-dispersed metal porous body having the shape in the form of a sheet, when the oxide-dispersed metal porous body is seen in a direction normal to the main surface thereof (the same applies to the description below).
(8) An amount of the oxide particles carried per unit area of the oxide-dispersed metal porous body is 10 g/m² to 100 g/m², and is preferably 15 g/m² to 50 g/m². In other words, an external appearance of the oxide-dispersed metal porous body has a shape in a form of a sheet, and an amount of the oxide particles carried per unit area of the shape is 10 g/m² to 100 g/m² and is preferably 15 g/m² to 50 g/m². This is because a balance is improved between the effect of improving the hydrophilicity and the electrode area for promoting electrolysis reaction. The amount of the oxide particles carried per unit area can be measured from the weight of unmelted oxide residues remaining after melting the metal porous body using an acid, for example.
(9) A thickness T of the oxide-dispersed metal porous body is preferably 0.1 mm to 10 mm, is more preferably 0.3 mm to 5 mm, and is further preferably 1.4 mm to 5 mm. In other words, an external appearance of the oxide-dispersed metal porous body has a shape in a form of a sheet, and the shape preferably has a thickness of 0.1 mm to 10 mm, more preferably has a thickness of 0.3 mm to 5 mm, and further preferably has a thickness of 1.4 mm to 5 mm. This is because a high porosity is likely to be secured and release of gas from the fine holes is also facilitated. Moreover, a hydrogen generation apparatus with high volume efficiency can be designed. It should be noted that thickness T is the average value of thicknesses of arbitrary ten positions of the oxide-dispersed metal porous body, for example. The thicknesses can be measured using a digital thickness gauge, for example.
(10) The oxide particles include at least one selected from a group consisting of iron oxide, nickel oxide, titanium oxide, aluminum oxide, zirconium oxide, cerium oxide, cobalt (II) oxide, molybdenum oxide, ruthenium oxide, iridium oxide, tin oxide, and silicon oxide can be used. The valence of the oxide is not questioned as long as it is stable during electrolysis. This is because these are less likely to be reduced during electrolysis, and have high stability. Among these, titanium oxide, aluminum oxide, zirconium oxide, and cerium oxide are much less likely to be reduced. One type of oxide particles may be used solely or a plurality of types of oxide particles may be used in combination.
(11) An electrolysis electrode according to one embodiment of the present invention includes the above-described oxide-dispersed metal porous body. Hence, a high hydrogen generation ability can be exhibited in water electrolysis.
(12) A hydrogen generation apparatus according to one embodiment of the present invention includes: an electrolyzer configured to store an alkaline aqueous solution; an anode and a cathode each immersed in the alkaline aqueous solution within the electrolyzer; and a power supply configured to apply voltage between the anode and the cathode, wherein at least one of the anode and the cathode is the above-described electrolysis electrode. According to this hydrogen generation apparatus, hydrogen can be generated highly efficiently.
(13) A hydrogen generation apparatus according to one embodiment of the present invention includes: an anode; a cathode; an electrolyte membrane disposed between the anode and the cathode; and a power supply configured to apply voltage between the anode and the cathode, wherein at least one of the anode and the cathode is the above-described electrolysis electrode. According to this hydrogen generation apparatus, hydrogen can be generated highly efficiently. The electrolyte membrane may be a polymer electrolyte membrane or may be a solid oxide electrolyte membrane.

### [Details of Embodiments of the Invention]

Embodiments of the present invention will be specifically described below. It should be noted that the present invention is defined by the terms of the claims, rather than the contents below, and is intended to include any modifications within the scope and meaning equivalent to the terms of the claims. Here, in the present specification, the expression "A to B" represents a range of lower to upper limits (i.e., more than or equal to A and less than or equal to B). When no unit is indicated for A and a unit is indicated only for B, the unit of A is the same as the unit of B.

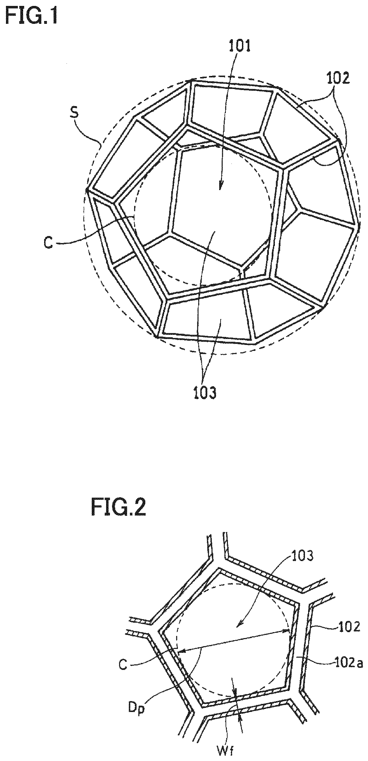

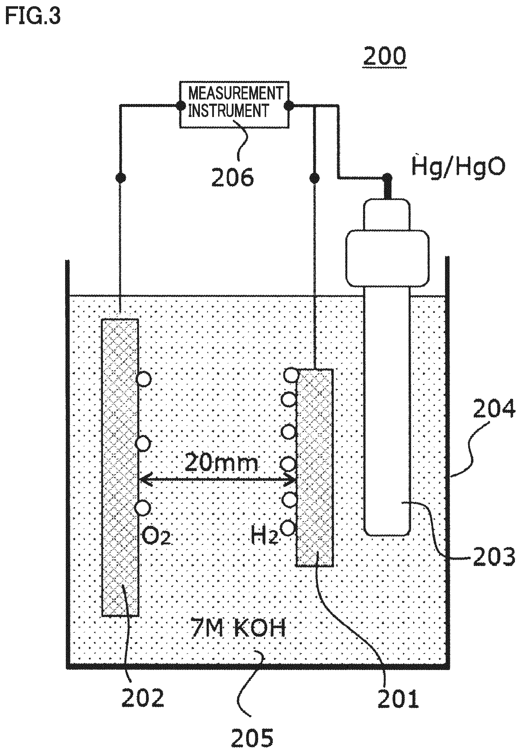

Hereinafter, explanation will be made with reference to Fig. 1 to Fig. 3. Fig. 1 is a schematic view showing an exemplary structure of a portion of a framework of an oxide-dispersed metal porous body. Fig. 2 is a cross sectional view schematically showing a cross section of the portion of the framework in Fig. 1. Fig. 3 is a schematic view illustrating an exemplary basic structure of a hydrogen generation apparatus. It should be noted that in each of the figures, oxide particles are not shown.

### (Oxide-Dispersed Metal Porous Body)

For example, the oxide-dispersed metal porous body includes a metal porous body base, and a plating layer formed on a surface of the metal porous body base. Here, the term "metal porous body base" refers to a base material including a metal framework. The above-described metal framework defines a two-dimensional hole (for example, an aperture described below) or a three-dimensional space (for example, a pore described below). The plating layer includes dispersed oxide particles. In this case, the oxide particles are carried in the metal framework (for example, fibrous portion 102 described below) unevenly at a surface layer portion. In other words, it can be understood that the oxide particles are carried in the metal framework as a portion of the plating layer. Moreover, the above-described oxide particles may be carried on the surface of the plating layer. The plating layer (hereinafter, referred to as "oxide-dispersed plating layer") including the dispersed oxide particles can be formed by the following method, for example.

First, a plating bath in which the oxide particles are dispersed is prepared. The plating bath is preferably stirred to sufficiently disperse the oxide particles. When a nickel plating layer is to be formed, a general plating bath including nickel sulfamate may be used as the plating bath, for example. The plating bath is preferably stirred to hit a liquid flow against the surface of the metal porous body base.

An amount of the oxide particles added to the plating bath is preferably 50 g/L to 500 g/L, is more preferably 100 g/L to 300 g/L, and is further preferably 200 g/L to 300 g/L. Accordingly, an oxide-dispersed plating layer having a sufficient amount of oxide particles incorporated therein can be formed, and fine holes of the metal porous body base can be sufficiently avoided from being blocked by too many oxide particles.

An average particle diameter of the oxide particles obtained in accordance with a laser diffraction type particle diameter distribution based on volume as a reference is preferably more than or equal to 0.1 µm and less than or equal to 10 µm, is more preferably more than or equal to 0.1 µm and less than or equal to 3 µm, and is further preferably more than or equal to 0.1 µm and less than or equal to 1 µm. In other words, the average particle diameter of the oxide particles is preferably more than or equal to 0.1 µm and less than or equal to 10 µm, is more preferably more than or equal to 0.1 µm and less than or equal to 3 µm, and is further preferably more than or equal to 0.1 µm and less than or equal to 1 µm. When the average particle diameter falls within such a range, precipitation due to aggregation of the oxide particles in the plating liquid is likely to be suppressed, the fine holes of the metal porous body base are also sufficiently avoided from being blocked by too large oxide particles, and the oxide particles are likely to be incorporated in the plating layer. The above-described average particle diameter can be measured by Partica LA-960 (trademark), which is a laser diffraction type particle size distribution measurement device provided by HORIBA, for example. The target powders are mixed with a solvent such as water, and are then dispersed using ultrasonic waves or the like. An appropriate refractive index is set to measure the particle size distribution and the average particle diameter is calculated.

Next, the metal porous body base may be immersed in the plating bath, which is being stirred to disperse the oxide particles, thereby forming an oxide-particle-dispersed plating layer on the surface of the metal porous body base. Moreover, the plating process is preferably performed while stirring the plating bath. In order to sufficiently secure an amount of the oxide particles carried therein and obtain a lightweight, inexpensive oxide-dispersed metal porous body, an amount of the metal for plating (amount of the oxide-particle-dispersed plating layer) is preferably 100 g/m² to 700 g/m², is more preferably 150 g/m² to 400 g/m², and is further preferably 150 g/m² to 300 g/m² per unit surface area of the metal porous body base. The amount of the metal for plating is determined by the following formula: {(the mass (g) of the oxide-dispersed metal porous body after performing the plating process) - (the mass (g) of the metal porous body base before performing the plating process)}/(the surface area (m²) of the metal porous body base before performing the plating process).

For the metal porous body base, a mesh, an expanded metal, a punching metal, a metal porous body having a three-dimensional mesh structure, or the like can be used. Among these, the metal porous body having the three-dimensional mesh structure is preferably used as the metal porous body base because an electrode surface can be made large. The material of the metal porous body base is stable in the electrolyte solution. It includes at least one selected from the group consisting of nickel or nickel alloy, aluminum or aluminum alloy, stainless steel, iron. For the material of the metal porous body base, stainless steel, iron, nickel is preferable. Nickel, which has a wide stable potential range in alkali, is particularly preferable.

The following illustratively further describes the oxide-dispersed metal porous body including the metal porous body base having the three-dimensional mesh structure.

The three-dimensional mesh framework is a metal framework having a nonwoven-fabric-like structure or a sponge-like structure, and is provided with a plurality of pores defined by the framework, for example. In another aspect of the present embodiment, it can be also understood that the three-dimensional mesh framework is provided with a plurality of pores 101 defined by fibrous portion 102 described below. Such a metal framework and a pore surrounded by the framework constitute one cell. The external appearance of the metal porous body base has a shape in the form of a sheet. Moreover, the external appearance of the oxide-dispersed metal porous body has a shape in the form of a sheet.

As shown in Fig. 1, one cell can be represented as a regular dodecahedron model, for example. Pore 101 is defined by a fibrous or bar-like metal portion (fibrous portion 102). The plurality of pores 101 are connected three-dimensionally (not shown). The framework of the cell is formed by fibrous portion 102 extending consecutively. In the cell, an aperture (or window) 103 having a substantially pentagon shape surrounded by fibrous portion 102 is formed. Adjacent cells communicate with each other with one aperture 103 being shared therebetween. That is, the framework of the metal porous body is formed by fibrous portion 102 that forms a mesh network while defining the plurality of consecutive pores 101. The framework having such a structure is referred to as "three-dimensional mesh framework".

As shown in Fig. 2, a void 102a may be provided in fibrous portion 102, i.e., fibrous portion 102 may be hollow. The metal porous body having such a hollow framework is very lightweight although it has a bulky three-dimensional structure. It should be noted that although not shown in the figures, fibrous portion 102 of the oxide-dispersed metal porous body has a two-layer structure including the metal framework of the metal porous body base and the oxide-dispersed plating layer. Moreover, the oxide-dispersed plating layer should be formed at least on a surface of the metal framework opposite to its surface facing void 102a.

The metal porous body base can be formed by coating, with a metal, a porous body composed of a resin (hereinafter, also referred to as "resin porous body") provided with communication pores, for example. The coating with the metal can be performed through a plating method, a vapor method (vapor deposition, plasma chemical vapor deposition, sputtering, or the like), application of a metal paste, or the like, for example. As a result of the coating with the metal, the three-dimensional mesh framework is formed. Among the above methods, the plating method is preferably used for the coating with the metal.

As the plating method, any method may be employed as long as a metal layer can be formed on the surfaces of the resin porous body (inclusive of the surface thereof at the inner space side) by the method. As the plating method, a known plating method can be employed, such as an electroplating method or a molten salt plating method. Through the plating method, a three-dimensional mesh metal porous body corresponding to the shape of the resin porous body is formed. That is, the aperture diameter and pore diameter (cell diameter) of the metal porous body to be obtained can be controlled in accordance with the pore diameter (cell diameter) of the resin porous body.

When the plating process is performed using the electroplating method, it is desirable to form an electrically conductive layer on the surface of the resin porous body prior to the electroplating. The electrically conductive layer may be formed on the surface of the resin porous body by electroless plating, vapor deposition, sputtering, or the like, may be formed thereon by application of an electrically conductive agent or the like, or may be formed thereon by immersing the resin porous body in a fluid dispersion including the electrically conductive agent.

The resin porous body is not particularly limited as long as the resin porous body is provided with the communication pores. A resin foam, a nonwoven fabric composed of a resin, or the like can be used for the resin porous body. Among these, the resin foam is preferable because the communication pores are likely to be formed in the metal porous body. As the resin for the porous body such as the resin foam, it is preferable to employ a resin that can be removed by decomposition or melting after the metal coating while the metal framework having the three-dimensional mesh structure remains. In this case, framework (fibrous portion) 102 can be hollow. Examples thereof include: thermosetting resins such as thermosetting polyurethane and melamine resins; thermoplastic resins such as olefin resins (polyethylene, polypropylene, and the like) and thermoplastic polyurethane; and the like. Among these, it is preferable to use the thermosetting polyurethane or the like because the pores are likely to be formed to have more uniform sizes or shapes.

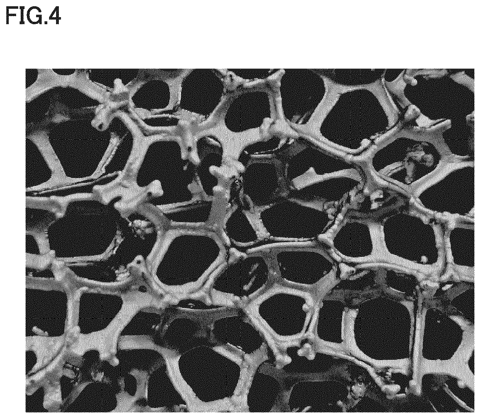

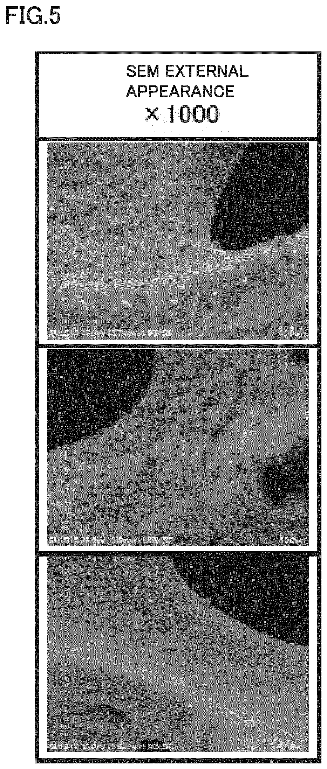

After removing the resin in the framework through decomposition or melting, components (the resin, decomposed material, unreacted monomer, and the like) remaining in the framework may be removed by washing. The resin may be removed by heating while appropriately applying voltage as required. Moreover, the heating may be performed while applying voltage with the plated porous body being immersed in the molten salt plating bath. By thus removing the resin after the metal coating, the metal porous body base in which the void is formed inside the framework is obtained. Moreover, the metal porous body base has a three-dimensional mesh structure corresponding to the shape of the resin foam. It should be noted that examples of a commercially available metal porous body base include "Aluminum-Celmet^{®}" or "Celmet^{®}" of copper or nickel, both of which are provided by Sumitomo Electric Industries (Fig. 4 and Fig. 5).

The external appearance of the metal porous body base has a shape in the form of a sheet, the mass per unit area of the shape is preferably 200 g/m² to 1000 g/m², and is more preferably 300 g/m² to 500 g/m².

The average pore diameter in the metal porous body base is not particularly limited. For example, the average pore diameter in the metal porous body base may be 100 µm to 4000 µm, may be 100 µm to 3000 µm, may be 200 µm to 1000 µm, or may be 500 µm to 1000 µm. The above-described average pore diameter can be determined by the same method as a method for determining the diameter (average pore diameter) of pores 101 in the oxide-dispersed metal porous body described below.

Next, aperture diameter D of the oxide-dispersed metal porous body is determined as follows, for example. First, any one aperture 103a is selected from apertures 103 provided in the oxide-dispersed metal porous body. Diameter Dp of the maximum right circle C (see Fig. 2) contained in the selected aperture 103a and the diameter of the minimum right circle that can contain aperture 103a are measured, and then the average value thereof is determined. This average value is regarded as aperture diameter Da of aperture 103a. Likewise, each of aperture diameters Db to Dj of a plurality of (for example, nine) any other apertures 103b to 103j of the oxide-dispersed metal porous body is determined. The average value of respective aperture diameters Da to Dj of these ten apertures 103a to 103j is regarded as aperture diameter D.

Specifically, in a SEM photograph of the main surface of the oxide-dispersed metal porous body, a region R is determined to include ten or more entire apertures 103. From apertures 103 included in region R, for example, ten apertures 103 are selected randomly and respective aperture diameters Da to Dj of apertures 103a to 103j are calculated by the above-described method. The average value of the calculated aperture diameters Da to Dj of apertures 103a to 103j is regarded as aperture diameter D.

Aperture diameter D of the oxide-dispersed metal porous body is preferably 100 µm to 2000 µm, and is more preferably 400 µm to 1000 µm. In other words, the oxide-dispersed metal porous body preferably has an aperture diameter of 100 µm to 2000 µm, and more preferably has an aperture diameter of 400 µm to 1000 µm. Aperture diameter D can be determined by the following method, for example. In the SEM photograph of the main surface of the oxide-dispersed metal porous body, apertures suitable for measurement are selected, aperture diameters at ten or more positions are measured, and the average value thereof is determined, thereby determining aperture diameter D.

In order to improve release of gas, porosity P is more than or equal to 70 volume%, is preferably more than or equal to 80 volume%, and is particularly preferably more than or equal to 85 volume%. In other words, the oxide-dispersed metal porous body has a porosity of more than or equal to 70 volume%, preferably has a porosity of more than or equal to 80 volume%, and particularly preferably has a porosity of more than or equal to 85 volume%. Porosity P is less than 100 volume%, may be less than or equal to 99.5 volume%, or may be less than or equal to 99 volume%. These lower and upper limit values can be combined appropriately. The porosity (volume%) is determined by the following formula: {1-(the apparent specific gravity of the metal porous body/the actual specific gravity of the metal)} × 100.

Diameter (also referred to as "cell diameter" or "average pore diameter") V1 of pore 101 in the oxide-dispersed metal porous body is not limited particularly. Pore diameter V1 may be 100 µm to 4000 µm, may be 200 µm to 1000 µm, or may be 500 µm to 1000 µm, for example. Pore diameter V1 is determined as follows, for example. First, any one pore 101a is selected from pores 101 in the oxide-dispersed metal porous body. The diameter of the maximum sphere contained in the selected pore 101a and the diameter of the minimum sphere S (see Fig. 1) that can contain pore 101a are measured, and the average value thereof is determined. This average value is regarded as pore diameter Va of pore 101a. Likewise, respective pore diameters Vb to Vj of a plurality (for example, nine) of any other pores 101b to 101j provided in the oxide-dispersed metal porous body are determined. The average value of pore diameters Va to Vj of these ten pores 101a to 101j is regarded as pore diameter V1.

Specifically, in a SEM photograph of the main surface of the oxide-dispersed metal porous body, a region V is determined to include ten or more entire pores 101. From pores 101 included in region V, for example, ten pores 101 are selected randomly and respective aperture diameters Va to Vj of pores 101a to 101j are calculated by the above-described method. The average value of the calculated pore diameters Va to Vj of pores 101a to 101j is regarded as pore diameter V1.

When the shape of each pore is not truly spherical and has a specific aspect ratio, pore diameter (cell diameter) V1 in the present invention refers to a numerical value measured in a direction in which V1 is maximum.

The specific surface area (BET specific surface area) of the oxide-dispersed metal porous body is also not particularly limited. The specific surface area of the metal porous body may be 100 m²/m³ to 9000 m²/m³, or may be 200 m²/m³ to 6000 m²/m³, for example.

Density d of apertures 103 in the oxide-dispersed metal porous body is also not particularly limited. Particularly, for resistance, density d is preferably 10/2.54 cm to 100/2.54 cm, and is more preferably 30/2.54 cm to 80/2.54 cm. It should be noted that density d refers to the number of apertures 103 on a straight line drawn on the surface of the oxide-dispersed metal porous body to have a length of 1 inch (= 2.54 cm). Here, when the straight line is terminated within an aperture located at an end portion of the straight line, this aperture is not counted.

Width Wf of framework (fibrous portion) 102 of the oxide-dispersed metal porous body is also not particularly limited. Particularly, for current collection, width Wf is preferably 3 µm to 500 µm, and is more preferably 10 µm to 500 µm.

Next, the following describes a hydrogen generation apparatus including the above-described oxide-dispersed metal porous body as an electrolysis electrode.

Hydrogen generation methods are roughly divided into: [1] an alkaline water electrolysis method using an alkaline aqueous solution; [2] a PEM method (Polymer Electrolyte Membrane method); and [3] a SOEC method (Solid Oxide Electrolysis Cell method). In each of the methods, the above-described metal porous body can be used as an electrolysis electrode (hereinafter, also simply referred to as "electrode").

### [1] Alkaline Water Electrolysis Method

In the alkaline water electrolysis method, an anode and a cathode are immersed in the alkaline aqueous solution (preferably, strong alkaline aqueous solution) and voltage is applied between the anode and the cathode, thereby electrolyzing the water. In this case, the above-described electrode can be used for at least one of the electrodes. At the anode, hydroxide ions are oxidized to generate oxygen and water. At the cathode, hydrogen ions are reduced to generate hydrogen. Since the electrode has large wettability with respect to water and has a large surface area, a contact area between each ion and the electrode is large, whereby the electrolysis efficiency of water is improved. Moreover, since the electrode has excellent electrical conductivity, the electrolysis efficiency of water is improved more. Further, since the porosity of the electrode is high, the generated hydrogen and oxygen can be released immediately. In order to improve the bubble releasability, water retentivity and electrical connection, one electrode may be constructed by layering a plurality of oxide-dispersed metal porous bodies having different pore diameters.

In order to prevent mixing of the generated hydrogen and oxygen, it is preferable to dispose a separating membrane (separator) between the anode and the cathode. The material of the separating membrane is not particularly limited as long as the material has wettability, ionic permeability, alkali resistance, non-electrical conductivity, non-gas permeability, thermal stability, and the like. Examples of the material of such a separator include: a fluororesin impregnated with potassium titanate; polyantimonate; polysulfone; hydrophilized polyphenylene sulfide; polyvinylidene fluoride; polytetrafluoroethylene; and the like. When a plurality of cells each constituted of the anode, the cathode, and the separator are stacked for use, it is preferable to dispose a separator, such as the one described above, between the cells in order to prevent short circuit.

A dissolved substance of the alkaline aqueous solution is also not particularly limited. Examples thereof include a hydroxide or the like of an alkali metal (lithium, sodium, potassium, rubidium, cesium, or francium) or an alkaline earth metal (calcium, strontium, barium, or radium). Among these, the hydroxide (particularly, NaOH or KOH) of the alkali metal is preferable because a strong alkaline aqueous solution is obtained. The concentration of the alkaline aqueous solution is also not particularly limited, and may be 20 mass% to 40 mass% in view of electrolysis efficiency. An operation temperature is, for example, about 50°C to 90°C, and a current density is, for example, about 0.1 A/cm² to 0.3 A/cm².

### [2] PEM Method

In the PEM method, water is electrolyzed using a polymer electrolyte membrane. Specifically, in the PEM method, an anode and a cathode are disposed on respective surfaces of the polymer electrolyte membrane, water is introduced into the anode, and voltage is applied between the anode and the cathode, thereby electrolyzing the water. Also in this case, the above-described electrode can be used for at least one of the electrodes. In the PEM method, the anode side and the cathode side are completely separated from each other by the polymer electrolyte membrane, which is an electrolyte membrane. Hence, as compared with the alkaline water electrolysis method, a high-purity hydrogen can be extracted, advantageously. Moreover, since the above-described electrode has a large surface area, has large wettability with respect to water, and has excellent electrical conductivity, the electrode is suitable as the anode of the hydrogen generation apparatus (PEM type hydrogen generation apparatus) employing the PEM method.

Here, protons generated by the PEM type hydrogen generation apparatus are moved to the cathode through the polymer electrolyte membrane, and are extracted as the hydrogen at the cathode side. The operation temperature of the PEM type hydrogen generation apparatus is about 100°C. As the polymer electrolyte membrane, it is possible to use a polymer having proton conductivity, such as perfluorosulfonate polymer, which has been conventionally used for a solid polymer fuel cell or the PEM type hydrogen generation apparatus. In some methods, a membrane having anion conductivity may be used. When the cathode includes the above-described electrode, the generated hydrogen can be released immediately.

### [3] SOEC Method

In the SOEC method (also referred to as "steam electrolysis method"), water vapor is electrolyzed using a solid oxide electrolyte membrane. Specifically, in the SOEC method, an anode and a cathode are disposed on respective surfaces of the solid oxide electrolyte membrane, water vapor is introduced into one of the electrodes, and voltage is applied between the anode and the cathode, whereby the water vapor is electrolyzed.

In the SOEC method, the electrode to which the water vapor is to be introduced differs depending on whether the solid oxide electrolyte membrane has proton conductivity or oxide ion conductivity. When the solid oxide electrolyte membrane has oxide ion conductivity, the water vapor is introduced into the cathode. The water vapor is electrolyzed at the cathode and protons and oxide ions are generated. The generated protons are reduced at the cathode without modification and are extracted as hydrogen. The oxide ions are moved to the anode through the solid oxide electrolyte membrane, are then oxidized at the anode, and are extracted as oxygen. On the other hand, when the solid oxide electrolyte membrane has proton conductivity, the water vapor is introduced into the anode. The water vapor is electrolyzed at the anode and protons and oxide ions are generated. The generated protons are moved to the cathode through the solid oxide electrolyte membrane, are then reduced at the cathode, and are extracted as hydrogen. The oxide ions are oxidized at the anode without modification and are extracted as oxygen.

When the above-described electrode is used as the electrode into which water vapor is to be introduced, the electrolysis efficiency of the water vapor is improved because the above-described electrode has a large surface area and large wettability with respect to water and therefore the contact area between the water vapor and the electrode is also large. Further, since the above-described electrode has excellent electrical conductivity, the electrolysis efficiency of the water vapor is improved more.

### [Examples]

Next, based on Examples, the present invention will be more specifically described. The Examples below, however, do not limit the present invention.

### [Example 1]

An oxide-dispersed metal porous body was produced in the following procedure.

As a metal porous body base, a metal porous body composed of nickel (Celmet^{®} provided by Sumitomo Electric Industries) was used which had a mass of 300 g/m² per unit area, had a thickness of 1.4 mm, and had an average pore diameter of 500 µm. A plating bath including nickel sulfamate was prepared, and 200 g/L of nickel oxide powder having an average particle diameter of 1 µm was added to the plating bath. This plating bath was used to perform nickel plating onto a surface of the metal porous body base while stirring the plating bath. A mass per unit area of the plated metal porous body (electrolysis electrode A) was 600 g/m².

### [Example 2]

Except that 200 g/L of titanium oxide powder having an average particle diameter of 1 µm was added to the plating bath instead of nickel oxide, the same operation as that in Example 1 was performed to obtain a plated metal porous body (electrolysis electrode B) having a mass of 600 g/m² per unit area.

### [Example 3]

Except that 200 g/L of aluminum oxide powder having an average particle diameter of 1 µm was added to the plating bath instead of nickel oxide, the same operation as that in Example 1 was performed to obtain a plated metal porous body (electrolysis electrode C) having a mass of 600 g/m² per unit area.

### [Example 4]

Except that 200 g/L of zirconium oxide powder having an average particle diameter of 1 µm was added to the plating bath instead of nickel oxide, the same operation as that in Example 1 was performed to obtain a plated metal porous body (electrolysis electrode D) having a mass of 600 g/m² per unit area.

### [Example 5]

Except that 200 g/L of cerium oxide powder having an average particle diameter of 1 µm was added to the plating bath instead of nickel oxide, the same operation as that in Example 1 was performed to obtain a plated metal porous body (electrolysis electrode E) having a mass of 600 g/m² per unit area.

### [Example 6]

Except that 200 g/L of cobalt (II) oxide powder having an average particle diameter of 1 µm was added to the plating bath instead of nickel oxide, the same operation as that in Example 1 was performed to obtain a plated metal porous body (electrolysis electrode F) having a mass of 600 g/m² per unit area.

### [Example 7]

Except that 200 g/L of molybdenum oxide powder having an average particle diameter of 1 µm was added to the plating bath instead of nickel oxide, the same operation as that in Example 1 was performed to obtain a plated metal porous body (electrolysis electrode G) having a mass of 600 g/m² per unit area.

### [Example 8]

Except that 200 g/L of iridium oxide powder having an average particle diameter of 1 µm was added to the plating bath instead of nickel oxide, the same operation as that in Example 1 was performed to obtain a plated metal porous body (electrolysis electrode H) having a mass of 600 g/m² per unit area.

### [Example 9]

Except that 200 g/L of ruthenium oxide powder having an average particle diameter of 1 µm was added to the plating bath instead of nickel oxide, the same operation as that in Example 1 was performed to obtain a plated metal porous body (electrolysis electrode I) having a mass of 600 g/m² per unit area.

### [Example 10]

Except that 200 g/L of silicon oxide powder having an average particle diameter of 1 µm was added to the plating bath instead of nickel oxide, the same operation as that in Example 1 was performed to obtain a plated metal porous body (electrolysis electrode J) having a mass of 600 g/m² per unit area.

### [Comparative Example 1]

Except that a plating bath having no oxide particles added therein was used, the same operation as that in Example 1 was performed to obtain a plated metal porous body (electrolysis electrode R) having a mass of 600 g/m² per unit area.

### <Evaluation of Hydrophilicity>

An electrolyte solution (KOH aqueous solution having a concentration of 7M) was dropped onto the surface of each electrolysis electrode as a droplet having a diameter of about 1 mm. A time until the electrolyte solution completely permeated was measured. As a result, in the electrode of Comparative Example 1, it took 11 seconds until the electrolyte solution completely permeated, whereas in each of the electrodes of Example 1 to Example 10, it took approximately 1 second until the electrolyte solution completely permeated. This is presumably because the hydrophilicity of the metal porous body was improved by the plating layer having the oxide particles dispersed therein.

### <Evaluation of Hydrogen Generation Ability>

A hydrogen generation apparatus 200 as shown in Fig. 3 was assembled and a container 204 was filled with an electrolyte solution 205, which was the same as the one described above. In electrolyte solution 205, linear sweep voltammetry was performed and a measurement instrument 206 was used to find a relation between voltage and current corresponding to generation of hydrogen. A test temperature was set to 30°C. A potential scanning range was set to -0.1 V to -1.5 V (vs. Hg/HgO reference electrode 203). A workpiece 201 for the electrolysis electrode had a size of 10 mm squares. For a counter electrode 202, the above-described metal porous body base having a size of 40 mm squares was used. An distance between the electrodes was 20 mm. A current value upon -1.4 V (vs. Hg/HgO electrode) is shown in Table 1.

**[Table 1]**

| Electrolysis Electrode | A | B | C | D | E | F | G | H | I | J | R |
|---|---|---|---|---|---|---|---|---|---|---|---|
| Oxide Particles | NiO | TiO₂ | Al₂O₃ | ZrO₂ | CeO₂ | CoO | MoO₃ | IrO₂ | RuO₂ | SiO₂ | - |
| Current (mA/cm²) | 416 | 455 | 470 | 500 | 576 | 423 | 465 | 465 | 442 | 513 | 350 |

As shown in Table 1, the current value of each of electrolysis electrode A to electrolysis electrode J of Example 1 to Example 10 was higher than that of electrolysis electrode R of Comparative Example 1. That is, the hydrogen generation ability of each of electrolysis electrode A to electrolysis electrode J of Example 1 to Example 10 was higher than that of electrolysis electrode R of Comparative Example 1. From the above result, it was proved that the hydrogen generation ability of the electrolysis electrode is improved by the plating layer having the oxide particles dispersed therein.

### INDUSTRIAL APPLICABILITY

The metal porous body according to the present invention is useful as various types of electrolysis electrodes.

### REFERENCE SIGNS LIST

101: pore; 102: fibrous portion; 102a: void; 103: aperture; 200: hydrogen generation apparatus; 201: workpiece; 202: counter electrode; 203: reference electrode; 204: container; 205: electrolyte solution; 206: measurement instrument.

## Claims

1. An oxide-dispersed metal porous body comprising a porous metal framework, and oxide particles carried in the metal framework, wherein the oxide-dispersed metal porous body has a porosity of more than or equal to 70 volume%, and wherein a material of the porous metal framework includes at least one selected from the group consisting of nickel, nickel alloy, aluminum, aluminum alloy, stainless steel, and iron, **characterized in that**:
an external appearance of the oxide-dispersed metal porous body has a shape in a form of a sheet,
a mass per unit area of the shape is 200 g/m² to 1500 g/m², wherein the unit area of the shape is a unit area of a projected area of the oxide-dispersed metal porous body having the shape in the form of a sheet, when the oxide-dispersed metal porous body is seen in a direction normal to the main surface thereof,
an amount of the oxide particles carried per unit area of the shape is 10 g/m² to 100 g/m², wherein the amount of oxide particles carried per unit area of the shape is measured using the method described in the description, and
each of the oxide particles includes at least one selected from a group consisting of iron oxide, nickel oxide, titanium oxide, aluminum oxide, zirconium oxide, cerium oxide, cobalt (II) oxide, molybdenum oxide, ruthenium oxide, iridium oxide, tin oxide, and silicon oxide.

2. The oxide-dispersed metal porous body according to claim 1, wherein the metal framework has a three-dimensional mesh structure.

3. The oxide-dispersed metal porous body according to claim 1 or claim 2, wherein the oxide-dispersed metal porous body has an aperture diameter of 100 µm to 2000 µm, the aperture diameter being measured using the method described in the description.

4. The oxide-dispersed metal porous body according to any one of claim 1 to claim 3, wherein the oxide particles are carried in the metal framework unevenly at a surface layer portion.

5. The oxide-dispersed metal porous body according to any one of claim 1 to claim 4, wherein the oxide particles have an average particle diameter of more than or equal to 0.1 µm and less than or equal to 10 µm.

6. The oxide-dispersed metal porous body according to any one of claim 1 to claim 5, wherein an external appearance of the oxide-dispersed metal porous body has a shape in a form of a sheet, and the shape has a thickness of 0.1 mm to 10 mm.

7. An electrolysis electrode comprising the oxide-dispersed metal porous body recited in any one of claim 1 to claim 6.

8. A hydrogen generation apparatus comprising:
an electrolyzer configured to store an alkaline aqueous solution;
an anode and a cathode each immersed in the alkaline aqueous solution; and
a power supply configured to apply voltage between the anode and the cathode, wherein
at least one of the anode and the cathode is the electrolysis electrode recited in claim 7.

9. A hydrogen generation apparatus comprising:
an anode;
a cathode;
an electrolyte membrane disposed between the anode and the cathode; and
a power supply configured to apply voltage between the anode and the cathode, wherein
at least one of the anode and the cathode is the electrolysis electrode recited in claim 7.

## Patentansprüche

1. Poröser Metallkörper mit dispergiertem Oxid, umfassend ein poröses Metallgerüst und Oxidteilchen, die in dem Metallgerüst getragen werden, wobei der poröse Metallkörper mit dispergiertem Oxid eine Porosität von mehr als oder gleich 70 Vol.-% aufweist und wobei ein Material des porösen Metallgerüsts mindestens eines enthält, das aus der Gruppe ausgewählt ist, die aus Nickel, Nickellegierung, Aluminium, Aluminiumlegierung, rostfreiem Stahl und Eisen besteht, **dadurch gekennzeichnet, dass**:
ein äußeres Erscheinungsbild des porösen Metallkörpers mit dispergiertem Oxid die Form einer Platte hat,
eine Masse pro Flächeneinheit der Form 200 g/m² bis 1.500 g/m² beträgt, wobei die Flächeneinheit der Form eine Flächeneinheit einer projizierten Fläche des porösen Metallkörpers mit dispergiertem Oxid mit der Form in Gestalt einer Platte ist, wenn der poröse Metallkörper mit dispergiertem Oxid in einer Richtung senkrecht zu seiner Hauptoberfläche betrachtet wird,
eine Menge der pro Flächeneinheit der Form getragenen Oxidteilchen 10 g/m² bis 100 g/m² beträgt, wobei die Menge der pro Flächeneinheit der Form getragenen Oxidteilchen nach dem in der Beschreibung beschriebenen Verfahren gemessen wird, und
jedes der Oxidteilchen mindestens eines enthält, das aus einer Gruppe ausgewählt ist, die aus Eisenoxid, Nickeloxid, Titanoxid, Aluminiumoxid, Zirconiumoxid, Ceroxid, Cobalt(II)-oxid, Molybdänoxid, Rutheniumoxid, Iridiumoxid, Zinnoxid und Siliziumoxid besteht.

2. Poröser Metallkörper mit dispergiertem Oxid nach Anspruch 1, wobei das Metallgerüst eine dreidimensionale Netzstruktur aufweist.

3. Poröser Metallkörper mit dispergiertem Oxid nach Anspruch 1 oder Anspruch 2, wobei der poröse Metallkörper mit dispergiertem Oxid einen Öffnungsdurchmesser von 100 µm bis 2000 µm aufweist, wobei der Öffnungsdurchmesser unter Verwendung des in der Beschreibung beschriebenen Verfahrens gemessen wird.

4. Poröser Metallkörper mit dispergiertem Oxid nach einem von Anspruch 1 bis Anspruch 3, wobei die Oxidteilchen in einem Oberflächenschichtabschnitt ungleichmäßig in dem Metallgerüst getragen werden.

5. Poröser Metallkörper mit dispergiertem Oxid nach einem von Anspruch 1 bis Anspruch 4, wobei die Oxidteilchen einen durchschnittlichen Teilchendurchmesser von mehr als oder gleich 0,1 µm und weniger als oder gleich 10 µm aufweisen.

6. Poröser Metallkörper mit dispergiertem Oxid nach einem von Anspruch 1 bis Anspruch 5, wobei das äußere Erscheinungsbild des porösen Metallkörpers mit dispergiertem Oxid eine Form in Gestalt einer Platte aufweist und die Form eine Dicke von 0,1 mm bis 10 mm hat.

7. Elektrolyseelektrode, umfassend den porösen Metallkörper mit dispergiertem Oxid nach einem von Anspruch 1 bis Anspruch 6.

8. Vorrichtung zur Erzeugung von Wasserstoff, umfassend:
einen Elektrolyseur, der dazu konfiguriert ist, eine alkalische wässrige Lösung zu speichern;
eine Anode und eine Kathode, die jeweils in die alkalische wässrige Lösung eingetaucht sind; und
eine Stromversorgung, die dazu konfiguriert ist, eine Spannung zwischen der Anode und der Kathode anzulegen, wobei
mindestens eine aus der Anode und der Kathode die in Anspruch 7 genannte Elektrolyseelektrode ist.

9. Vorrichtung zur Erzeugung von Wasserstoff, umfassend:
eine Anode;
eine Kathode;
eine Elektrolytmembran, die zwischen der Anode und der Kathode angeordnet ist; und
eine Stromversorgung, die dazu konfiguriert ist, eine Spannung zwischen der Anode und der Kathode anzulegen, wobei
mindestens eine aus der Anode und der Kathode die in Anspruch 7 genannte Elektrolyseelektrode ist.

## Revendications

1. Corps poreux métallique dispersé dans un oxyde, comprenant une charpente métallique poreuse, et des particules d'oxyde portées dans la charpente métallique, lequel corps poreux métallique dispersé dans un oxyde a une porosité supérieure ou égale à 70 % en volume, dans lequel un matériau de la charpente métallique poreuse comprend au moins l'un choisi dans le groupe constitué par le nickel, un alliage de nickel, l'aluminium, un alliage d'aluminium, l'acier inoxydable, et le fer, **caractérisé en ce que** :
l'aspect externe du corps poreux métallique dispersé dans un oxyde a une forme de tôle,
la masse par unité de surface de la forme est de 200 g/m² à 1 500 g/m², dans laquelle l'unité de surface de la forme est l'unité de surface de la surface projetée du corps poreux métallique dispersé dans un oxyde ayant une forme de tôle, quand le corps poreux métallique dispersé dans un oxyde est observé dans une direction normale à sa surface principale,
la quantité des particules d'oxyde portées par unité de surface de la forme est de 10 g/m² à 100 g/m², laquelle quantité de particules d'oxyde portées par unité de surface de la forme est mesurée au moyen de la méthode décrite dans la description, et
chacune des particules d'oxyde comprend au moins l'un choisi dans le groupe constitué par l'oxyde de fer, l'oxyde de nickel, l'oxyde de titane, l'oxyde d'aluminium, l'oxyde de zirconium, l'oxyde de cérium, l'oxyde de cobalt(II), l'oxyde de molybdène, l'oxyde de ruthénium, l'oxyde d'iridium, l'oxyde d'étain, et l'oxyde de silicium.

2. Corps poreux métallique dispersé dans un oxyde selon la revendication 1, dans lequel la charpente métallique a une structure réticulée tridimensionnelle.

3. Corps poreux métallique dispersé dans un oxyde selon la revendication 1 ou 2, lequel corps poreux métallique dispersé dans un oxyde a un diamètre d'ouverture de 100 µm à 2 000 µm, le diamètre d'ouverture étant mesuré au moyen de la méthode décrite dans la description.

4. Corps poreux métallique dispersé dans un oxyde selon l'une quelconque des revendications 1 à 3, dans lequel les particules d'oxyde sont portées dans la charpente métallique non uniformément au niveau d'une portion de couche de surface.

5. Corps poreux métallique dispersé dans un oxyde selon l'une quelconque des revendications 1 à 4, dans lequel les particules d'oxyde ont un diamètre de particule moyen supérieur ou égal à 0,1 µm et inférieur ou égal à 10 µm.

6. Corps poreux métallique dispersé dans un oxyde selon l'une quelconque des revendications 1 à 5, dans lequel l'aspect externe du corps poreux métallique dispersé dans un oxyde a une forme de tôle, et la forme a une épaisseur de 0,1 mm à 10 mm.

7. Electrode d'électrolyse comprenant le corps poreux métallique dispersé dans un oxyde exposé dans l'une quelconque des revendications 1 à 6.

8. Appareil de génération d'hydrogène comprenant :
un électrolyseur configuré pour stocker une solution aqueuse alcaline ;
une anode et une cathode immergées chacune dans la solution aqueuse alcaline ; et
une alimentation électrique configurée pour appliquer une tension entre l'anode et la cathode,
dans lequel
au moins l'une parmi l'anode et la cathode est l'électrode d'électrolyse exposée dans la revendication 7.

9. Appareil de génération d'hydrogène comprenant :
une anode ;
une cathode ;
une membrane d'électrolyte disposée entre l'anode et la cathode ; et
une alimentation électrique configurée pour appliquer une tension entre l'anode et la cathode,
dans lequel au moins l'une parmi l'anode et la cathode est l'électrode d'électrolyse exposée dans la revendication 7.
